Europäisches Patentamt

European Patent Office

Office européen des brevets

(11) Publication number: **0 251 640 B1**

(12) **EUROPEAN PATENT SPECIFICATION**

(45) Date of publication of patent specification: **04.03.92** (51) Int. Cl.5: **A41D 31/02**

(21) Application number: **87305553.7**

(22) Date of filing: **23.06.87**

(54) **Cold weather garments.**

(30) Priority: **26.06.86 US 879053**
**14.07.86 US 885444**
**30.03.87 US 31661**

(43) Date of publication of application:
**07.01.88 Bulletin 88/01**

(45) Publication of the grant of the patent:
**04.03.92 Bulletin 92/10**

(84) Designated Contracting States:
**CH DE GB LI SE**

(56) References cited:
**EP-A- 0 110 626      DE-A- 2 835 412**
**DE-U- 8 601 066      US-A- 2 768 924**
**US-A- 3 940 811      US-A- 4 104 430**
**US-A- 4 194 041      US-A- 4 469 736**

(73) Proprietor: **Burlington Industries, Inc.**
**3330 West Friendly Avenue**
**Greensboro North Carolina 27420(US)**

(72) Inventor: **Ambrosiani, Vincent R.**
**1400 Hobbs Road**
**Greensboro North Carolina 27410-3952(US)**
Inventor: **Lassiter, Dean B.**
**3925 C-Colony Square**
**Greensboro North Carolina 27407(US)**
Inventor: **Mann, Joe A.**
**3411 North Rockingham Road**
**Greensboro North Carolina 27407(US)**

(74) Representative: **Shaw, Laurence**
**George House George Road**
**Edgbaston Birmingham B15 1PG(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

**Description**

In extremely cold conditions, the two most important requirements for clothing -- to provide humans with the ability to survive and/or be comfortable -- are the necessity of reducing heat loss from the body, and permitting the controlled transmission of moisture produced by perspiration. Traditionally, the reduction of heat loss has been accomplished by wearing heavy garments and/or by putting on multiple layers of garments. The transmission of moisture has been provided for in various ways, such as by wearing of vapor permeable garments, providing ventilation at the cuffs or collars, deliberately providing vent holes in the garments, etc. Within approximately the last decade and a half, two different systems have emerged for providing enhanced comfort, and/or survivability, even under extremely cold conditions and harsh environments.

One of the two cold weather garment systems that is most accepted is known, for civilian garments, as the Patagonia system, and its closely related military counterpart is the ECWCS system. These are layered systems consisting of three or more separate garments that are worn one over the other, each set consisting of an upper body series of layers, and a lower body series of layers. The outer set in the ECWCS system is of Gore-Tex laminated polytetrafluorethylene fabric.

Another accepted and very successful "cold weather system", which has been proven effective in a wide variety of cold weather climates broadly comprises a garment defined by an interior synthetic lining fabric; a synthetic outer fabric; a layer of preponderantly open cell foam at least 0.635 cm (1/4 inch) thick between the interior lining, foam layer, and outer fabric connected together by connecting means to form a garment, the garment having an MVT value of at least 500 grams per square metre per 24 hours. The system is known as the Phillips system, and was developed by the well known outdoorsmen J G Phillips, Jr. and Sr. This system comprises unitary garments, rather than layers. An exemplary garment is made up of three components; an outer or "shell" layer of military nylon camouflage fabric selected for its ruggedness and high permeability to air and moisture vapour; an approximately one inch thick layer of soft and flexible polyurethane open cell foam; and an interior woven or knit lining fabric. The three components are sewn together to form a unitary garment. As a single garment system, rather than a multi-layered system, the Phillips system has a number of advantages over the ECWCS system. However the Phillips system has functional drawbacks. For example in tests, the wearer of a Phillips system garment was quite uncomfortable in temperatures of -29°C (-20°F) to -12°C (-10°F) at wind speeds of 9 metres per second (20 miles per hour) to 13.5 metres per second (30 miles per hour).

A multi-layered material comprising outer and inner fabric layers with an open cell polyester foam material at least 2 mm thick bonded between them is disclosed in DE-A-2835412.

In accordance with the invention the garment defined has an air permeability of less than 4.6 cubic metres per minute per square metre (15 cubic feet per minute per square foot) at 0.0127 metres (0.5 inches) head of water.

In tests in the same conditions as the Phillips system recited above, a garment embodying the invention kept a wearer warm and comfortable for a period of 5 days.

A preferred outer fabric is woven from a fine denier, multifilament, synthetic yarn (preferably polyester or polyamide yarn) which is woven into a high density construction with controlled air porosity and moisture vapour transport properties.

Preferably, the foam layer has a face that is convoluted. This enables an increase in the flexibility of the garment, and in a reduction in the amount of material and weight of the garment. Also, since added surface area is provided by the convoluted face, moisture transfer during sweating by the wearer is enhanced. This is all accomplished without a decrease in the warmth retention properties of the garment, and in fact the moisture transport capabilities thereof are actually increased.

The convoluted foam sheet preferably includes a flat face. The convoluted face abuts the inner lining of the garment, while the flat face abuts the outer fabric. While the convoluted face may take a number of different forms, it preferably basically has a form like that of an egg carton, having peaks and valleys, with the peaks disposed in a generally grid-like arrangement, with ridges between the peaks, and with four peaks surrounding a valley, and vice-versa.

The foam layer utilized may be a "skin foam" or skinned foam". The partially open cell skin foam may have a thickness of between 0.635 cm (1/4 inch) and 1.9 cm (3/4 inch). At least one major face of the foam layer is preferably flat, and has a skin, a flat skinned face being in contact with the outer fabric, and enhancing the ease of construction and wind resistance of the garment. The foam layer may be composed of a single piece of foam, and the second major face of the single piece of foam also may be flat and skinned, or it may be convoluted, or it may be flat and not skinned, depending upon the particular other parameters selected.

2

As an alternative construction, instead of a single thickness piece of foam being provided as the foam layer, a plurality of smaller thickness pieces of foam may be provided as the foam layer; for example instead of one 1.9 cm (3/4 inch) thick piece of polyurethane foam, two 0.95 cm (3/8 inch) thick pieces may be provided. Dual construction, with both pieces having a skinned face, enhances the wind resistance of the garment.

The final garment according to the invention must have a moisture vapour transmission value rate of at least 500 grams per square metre per 24 hours. The foam layer may have an air permeability of less than about 3 cubic metres per minute per square metre (10 cubic ft. per minute per square ft) at a pressure of 1.27 cm (0.5 inches) of water. The foam layer may also have a spray resistance of less than 100 per cent wet pickup at a 90 degree angle of impact and less than 150 degrees wet pickup at a 45 degree angle. Further, the skinned foam face (or all skinned faces where there are more than one) may have a surface friction of less than about 0,9 kg (two pounds) using a 0,45 kg (one pound) test load.

While the outer fabric can be formed of VERSATECH, or like relatively expensive tightly woven fabrics, a less expensive outer fabric may also be utilized. For example, the outer shell may comprise a tightly knit synthetic yarn fabric having an air permeability value of less than about 3 cubic metres per minute per square metre (10 cubic feet per minute per square foot) at a pressure of 1.74 cm (0.5 inches) water, and it may be treated with a water repellent coating. More particularly, the outer shell fabric may comprise approximately 210 denier continuous filament nylon warp knit and 3 ply approximately 70 denier air textured nylon filling yarn woven in a plain weave having about 79 ends and about 61 picks per inch.

Embodiments of the invention will now be described, by way of example, with reference to the accompanying drawings, in which

Figure 1 is a perspective schematic view of upper and lower body garments embodying the present invention;

Figure 2 is a cross-sectional view of a portion of one of the garments of Figure 1, showing the construction of the three components;

Figure 3 is a photograph, at a magnification of 50 times, showing an exemplary outer fabric utilized in the garment of Figures 1 and 2;

Figure 4 is a top perspective view of an exemplary convoluted foam that may be utilized in the garment of Figures 1 and 2;

Figures 5 and 6 are side cross-sectional, and top plan views, respectively, of the convoluted foam of Figure 4;

Figure 7 is a view like Figure 2 only showing convoluted foam between the fabric layers;

Figure 8 is a view like that of Figure 7 only showing a skinned foam;

Figures 9 and 10 are side views, like that of Figure 8, showing two other embodiments of the invention using skin foam; and

Figure 11 is a cross-sectional view of the foam layer of the garment 10 or 11, illustrating an edge-to-edge positioning of two pieces of foam comprising the foam layer.

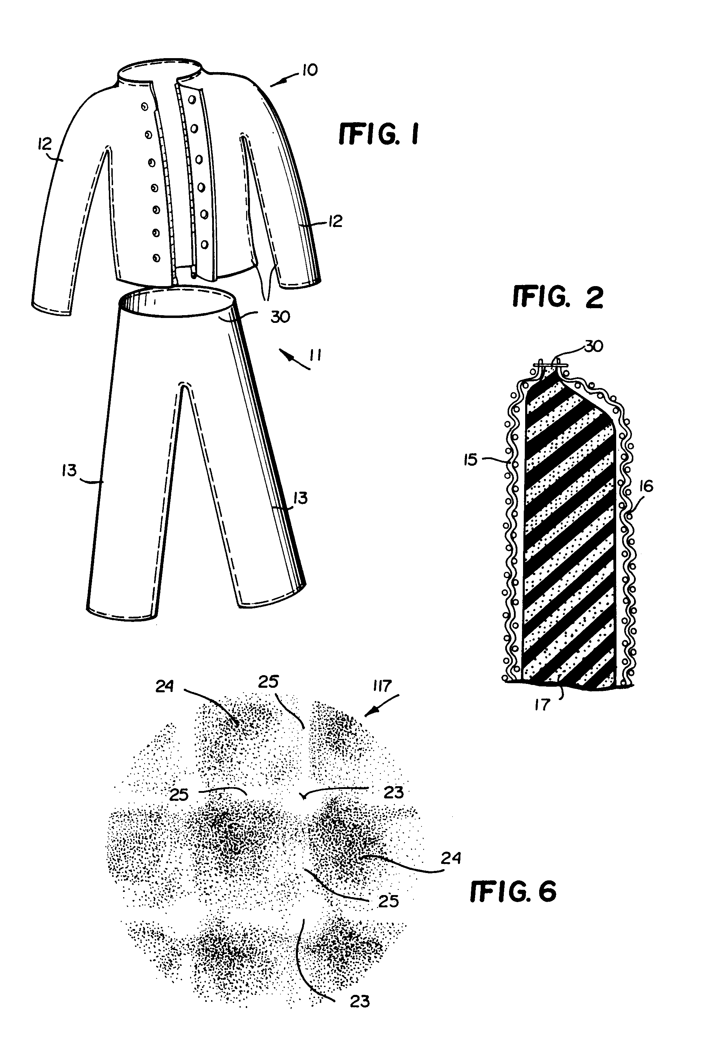

Exemplary cold weather garments embodying the invention are illustrated schematically in Figure 1, an upper body garment being illustrated by reference numeral 10, and the lower body garment by reference numeral 11. The upper body garment 10 protects the upper part of the wearer's body, and has arm portions 12 which cover the wearer's arms. The lower body garment 11 protects the lower portion of the wearer's body, and includes leg portions 13. Utilizing the garments 10, 11, the wearer needs no other garments in order to provide sufficient cold weather protection for the wearer's body, arms, and legs, although additional garments will be utilized to protect the wearer's hands, feet, and head. While no other additional garments are necessary for cold weather protection, the wearer can, if desired, wear underwear, or like garments, although it is necessary that the wearer avoid wearing any other type of garment (whether inner or outer) which has poor moisture vapour transmission properties.

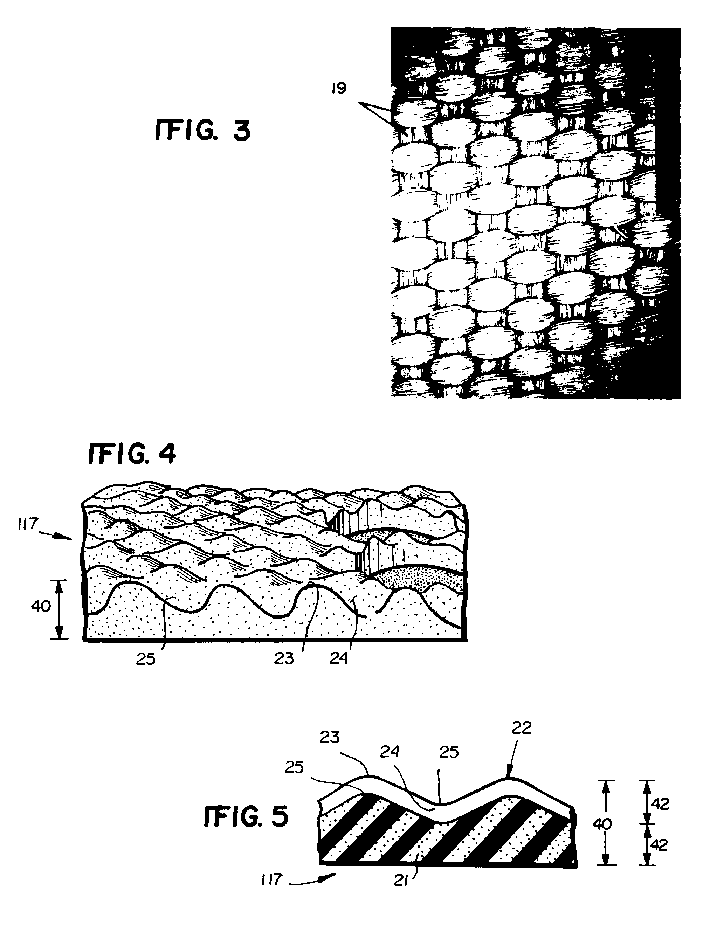

The construction of each of the garments 10, 11, is illustrated in Figure 2, each of the garments, comprising (or consisting of) three layers, comprising an outer or shell fabric layer 15, an inner fabric layer 16, and a layer of foam 17 (or 117, 217, 317, or 417; see Figures 4-10) disposed between the fabric layers 15, 16.

The outer fabric layer 15 may be the component of the garment which provides enhanced wind resistance. The fabric 15 may for example be any suitable fabric which has air permeability of less than 4.6 cubic metres per minute per square metre (15 cubic feet per minute per square foot) at 1.74 cm (0.5 inches) head of water, and preferably has less than 3 cubic metres per minute per square metre (10 cubic ft per minute per cubic ft). Despite its low air permeability, the fabric 15 must have good moisture vapour transmission, that is it should be at least about 500, preferably 1,000 grams per square metre per 24 hours.

One particular fabric 15 which has the desired air permeability and moisture vapour transmission properties, comprises a high density woven fabric, woven from fine denier, multi-filament, synthetic yarn (e.g. polyester yarn). Such a fabric is available commercially from Burlington Industries, Inc. under the trademark "VERSATECH". A piece of VERSATECH fabric, at a magnification of 50 times, is illustrated in the photograph of FIGURE 3. Note in particular the fine denier multi-filament yarns 19, which make up the weave of the fabric.

Alternatively, the fabric 15 may be a tightly woven nylon (polyamide) fabric with a warp count of between about 63-79, and a filling count of between about 57-61. This fabric is less expensive than VERSATECH, and has better abrasion resistance. For example, a series of nylon fabrics were prepared as candidate shell fabrics for garments embodying the invention. The structures and significant properties were as follows:

| Fabric no. | Yarn Deniers Warp Filling | Yarn Count Warp X Filling | WT kg/m² (oz/yd²) | M.V.T. g/m²/24hrs | Air Porosity m³/min/m² (ft³/min/ft²) |
|---|---|---|---|---|---|
| 1 | 210 3 x 70/66 | 79/61 | 0.168 (4.94) | 1333 | 3.0 ( 9.8) |
| 2 | 210 330 | 79/59 | 0.193 (5.69) | 1212 | 1.8 ( 5.9) |
| 3 | 330 3 x 70/66 | 64/59 | 0.197 (5.82) | 1273 | 4.0 (13.2) |
| 4 | 330 330 | 53/57 | 0.212 (6.25) | 1212 | 2.9 ( 9.4) |

The inner fabric 16 may be of any suitable conventional type. For instance both knit or woven fabrics can be utilized. The major purpose of the inner fabric 16 is just to prevent the foam 17 from directly contacting the body, while allowing free moisture vapour transmission from the body to the foam. One particular fabric that is especially suitable for the inner lining 16 is a loosely knit nylon or polyester tricot fabric, such as one commercially available from Burlington Industries of Greensboro, North Carolina and

EP 0 251 640 B1

having the designation "Style No. 18085", with a moisture vapour transmission rate value of at least 1,000 grams per square metre per 24 hours.

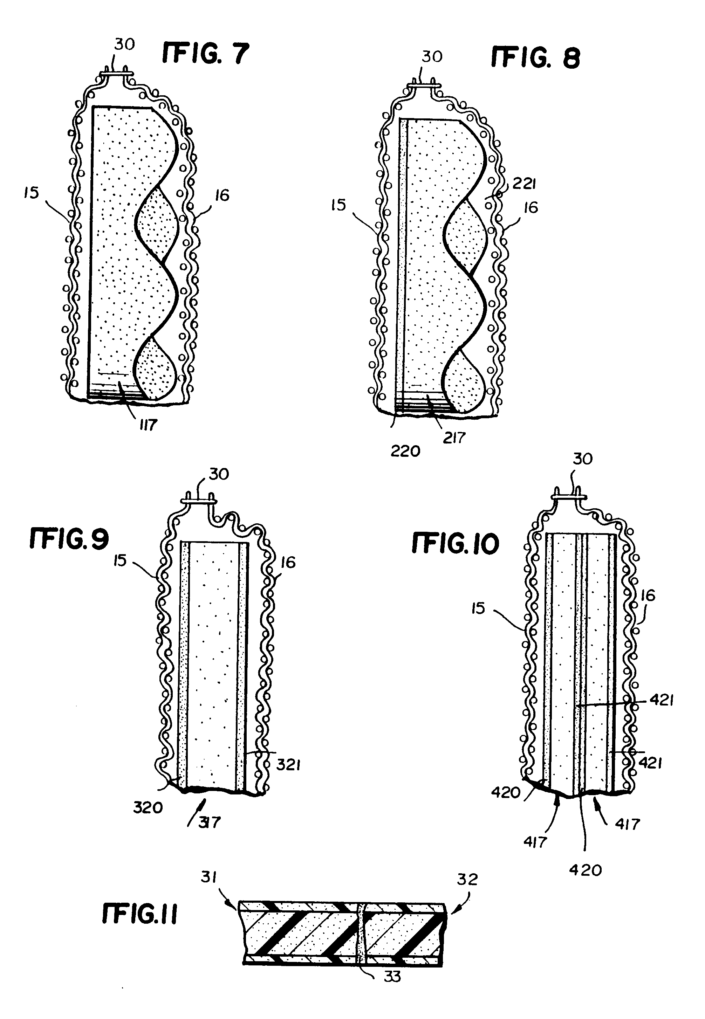

The foam 17 of the garment may be of any suitable construction, and preferably is a preponderantly open cell, soft and flexible polyurethane foam. The thickness of the foam layer will depend on its properties and those of the fabrics 15, 16. The foam layer 17 of Figure 2 has a thickness of at least 1.2 cm (1/2 inch) and preferably a thickness of at least about 1.9 cm (3/4 of an inch) and desirably a thickness of about 2.5 cm (one inch). While the foam may have a uniform thickness, as is conventional in the Phillips system and as is illustrated for the layer 17 in Figure 2, it is advantageous to provide the foam having a convoluted construction, as illustrated in Figures 4 through 8, and/or with a "skin", as illustrated in Figures 8 through 11.

The convoluted foam 117 of Figures 4 through 6 has a first face, 21, which is adapted to abut the outer fabric 15, and a second, convoluted face 22, having peaks 23 and valleys 24, the peaks 23 adapted to abut the inner lining fabric 16. For the particular embodiment illustrated in the drawings, note that the peaks 23 are disposed in a substantially linear grid-like arrangement, with ridges 25 interconnecting the peaks 23, and with four peaks 23 and associated ridges 25 surrounding each valley 24. In one embodiment of convoluted foam, the entire thickness 40 (see Figure 5 in particular) of the foam layer is about 2.5 cm (one inch), while the thickness of the base of the foam layer 117, and the spacing between the bottom of each valley and the top of each peak, are each approximately of the dimension 42, which is approximately 1.2 cm (1/2 inch). One such suitable convoluted foam is commercially available from Technical Foam Products of Charlotte, North Carolina.

The convoluted foam layer 117 has a number of advantages. It increases the flexibility and reduces the material and weight of the entire garment. Also, the peak and valley surface 22 provides added surface area for moisture transfer during sweating since moisture transfer includes permeation of water vapour.

The three layers of the garments are connected together by suitable connecting means to form the garment. A preferred form that the connecting means takes is illustrated schematically in Figures 1 and 2, and comprises stitching 30, the stitching 30 being provided at the edges of the garment for stitching the outer fabric 15 and inner lining 16 to the foam layer 17. Stitching 30 is provided wherever necessary in order to construct a particular garment. If desired, an additional ridge of material may be provided at the edges of the garment at the area of the stitching.

In actual tests in an environment in which the temperature was in the range of -29°C (-20°F) to -12°C (+10°F) and the wind was continuous at 9 to 13.5 metres per second (20-30 miles per hour), garments embodying the invention were demonstrated to be superior to the ECWCS system, and the Phillips system. After four days in the ECWCS garment, the tester was severely chilled and was on the verge of hypothermia, with a core temperature of about 32.8°C (91°F). The tester then switched to the garments embodying the invention, with a foam layer 17 approximately 2.5 cm (one inch) thick. The tester's body temperature rose within 2.5 hours to 38.3°C (101°F) and levelled off at 37°C (98.6°F) within 15 hours. The tester remained warm and comfortable over the next five days. The tester also evaluated the Phillips system, which is entirely suitable for the temperature range -29 to -12°C (-20 to +10°F) if the wind is low. However, because of the low wind resistance of the Phillips system, he was quite uncomfortable in the continuous wind of 9 to 13.5 metre per second (20-30 miles per hour).

Laboratory tests were also done comparing the moisture vapour transport, and air permeability of the present shell fabrics, the Phillips system, and the ECWCS system, and also comparing the present garments, the Phillips system, and the ECWCS system. Those laboratory determinations are as follows:

6

| Shell Fabric | MVT g/m²-24hrs | Air Permeability m³/min/m² (ft³/min/ft³) | | Weight kg/m² (oz/yd²) | |
| --- | --- | --- | --- | --- | --- |
| VERSATECH | 1610 | 0.52 | ( 1.70) | 0.093 | (2.75) |
| Camouflage fabric (Phillips) | 1470 | 13.56 | (44.5 ) | 0.093 | (2.75) |
| Gore-Tex (ECWCS) | 460 | 0.0 | ( 0.0 ) | 0.193 | (5.70) |

| Garment Sample | MVT g/m²-24hrs | Air Permeability m³/min/m² (ft³/min/ft²) | |
| --- | --- | --- | --- |
| VERSATECH/one-inch foam/lining fabric composite garment | 676 | 0.61 | ( 1.99) |
| Camouflage fabric/one-inch/ lining fabric composite garment of Phillips | 554 | 10.85 | (35.6 ) |
| ECWCS composite garment | 521 | 0.0 | ( 0.0 ) |

While the laboratory results set forth above with respect to the composite garments may not be entirely accurate due to difficulties in testing, it is believed that the results are generally accurate and confirm what is clear from the subjective tests done by the cold weather expert tester, namely that the system according to the invention can be considered superior to the ECWCS and Phillips systems.

In the embodiments of Figures 8-11, a skin foam is used. Again, the foam thickness depends on a large number of variables, but usually the foam layer 217 would at least about 0.31 cm (1/8 inch thick), and preferably is a 0.63 to 1.9 cm (1/4-3/4 inch) thick layer of skinned partially open cell polyurethane foam. Note the major face 220 of the foam layer 217 which is a flat major face having the "skin" formed thereon. In the particular embodiment illustrated in Figure 8, the second major face, 221, of the foam layer 217, is convoluted. Note that the skinned face 220 abuts the outer garment 16.

The skin construction of the foam may be produced by a number of commercially available techniques. One suitable foam that is commercially available is sold under the trade designation "Basic" by Speciality Composites Corporation of Newark, Delaware. Attention is also directed to the following US patents which teach conventional techniques for forming skinned foam: US-A-4,518,557; US-A-4,242,463; and US-A-3,709,965.

Two other embodiments of the foam layer are illustrated in Figures 9 and 10. In Figure 9, the foam layer 317 has two major skin faces 320, 321, and preferably comprises a single thickness of foam [e.g. approximately 1.9 cm (3/4 of an inch) thick]. In the Figure 10 embodiment, two identical but separate pieces of foam 417 are provided, each having a first major skinned face 420, and a second major skinned face 421. In the Figure 10 embodiment, the two pieces of foam 417 comprising the foam layer are each about 0.95 cm (3/8 of an inch) thick, the composite layer being about 1.9 cm (3/4 of an inch) thick.

The skinned foam insulation should have a moisture vapour transmission rate (MVT) value of at least 500 grams per square metre per 24 hours in order to provide for the transport of moisture vapour from the wearer's body. Also the skinned foam insulation should preferably have an air permeability value of less than 10 cfm/sq. foot at a pressure of 0.5 inches of water to provide good wind resistance. Further, the skinned foam insulation should preferably have a spray resistance of less than 100 per cent wet pickup (%WPU) at a 90 degree angle of impact and less than 150% WPU at a 45 degree angle of impact to provide for improved water repellency. Finally, it is desirable that the skin foam insulation should have a surface friction of less than 0,9 kg (two pounds) using a 0,45 kg (one pound) test load in order to minimize problems associated with cutting and sewing and handling of the open cell foam sheets and forming the finished garment.

In the manufacture of the garments 10, 11 (or other cold weather garments utilizing this foam, such as hats, mittens, parkas, hoods, or the like), the foam first is cut into one or more pieces to generally form the garment shapes. Seams are stitched together to form the basic garment, such as illustrated by reference numeral 30 in Figures 1 and 8 through 11. The foam pieces may be bonded together in edge-to-edge configuration at the seams using an organic adhesive. For example the two foam sheets 31, 32 illustrated in Figure 11, forming the foam layer comparable to the layer 217 illustrated in Figure 8, have their edges in substantial abutting engagement with an organic adhesive 33 holding them together. One example of organic adhesive that may be utilized is available from the John G Traveler Company of Philadelphia, Pennsylvania and sold under the trade name "FRISYLEN". Utilizing the organic adhesive between the foam pieces 31, 32, instead of stitching them together (which also is an option) can be advantageous since the stitching can compress the foam thereby causing "heat leaks".

Utilizing the skinned foam pieces, described it is easier to slide them across work surfaces and to align them in edge-to-edge configurations to form the foam layer which will be sandwiched between the two fabric layers.

The outer fabric 16 may be "VERSATECH", but need not be in view of the enhanced wind resistance provided by the foam construction. For example the outer shell fabric 16 may be formed of a tightly knit nylon fabric which is made of commercially available approximately 210 denier continuous filament nylon warp yarn and 3 ply approximately 70 denier air textured nylon filling yarn, woven in a plain weave having about 79 ends and about 61 picks per inch. This shell fabric provides an air permeability value of less than 3 cubic metres per minute per square metre (10 cubic feet per square foot per minute) at a pressure of 1.2 cm (0.5 inches) of water, and preferably is treated with the commercially available water repellent, such as one sold by the 3M Company of Minneapolis, Minnesota under the trademark "SCOTCHGARD". However, other even less expensive outer shell fabrics of synthetic material may be provided, such as military nylon fabrics which have higher air permeabilities than would have been acceptable in the conventional Phillips system as far as wind resistance is concerned. As a matter of fact a variety of outer fabrics 16 may be utilized as long as the MVT value of the composite garment is at least 500 grams per square metre per 24 hours.

Experimental values comparing various properties of foam, fabrics, and composite garments embodying the invention with the prior art are indicated by the following tables:

8

**TABLE 1**

| Foam Sample | MVT g/m²-24hrs | Air Permeability m³/min/m² (ft³/min/ft²) | Weight kg/m² (oz/yd²) |
|---|---|---|---|
| Prior Art L&P 1112/1.9cm(3/4") | 654 | 62.5 (205) | 0.28 ( 8.3) |
| Fig.3 Skin Foam/1.9cm(3/4") | 545 | 2.49 (8.17) | 0.75 (22.0) |
| Fig.4 Skin Foam/1.9cm(3/4") (2 sheets of 0.95cm (3/8" each) | 533 | 1.71 (5.60) | 0.70 (20.5) |
| **Shell Fabric** | | | |
| VERSATECH | 1610 | 0.52 (1.70) | 0.093 ( 2.75) |
| Exp.Nylon | 1333 | 2.98 (9.78) | 0.168 ( 4.94) |
| Prior Art Military Nylon | 1470 | 13.56 (44.5 ) | 0.093 ( 2.75) |
| **Garment Sample** | | | |
| VERSATECH/L&P 1112/1.9cm (3/4") | 650 | 0.52 (1.7) | |
| Exp.Nyl./Skin Foam 1.9cm (3/4") | 545 | 2.50 (8.2) | |
| Exp.Nyl./Skin Foam 1.9cm (3/4") (2 sheets of 0.95cm (3/8") | 530 | 1.71 (5.6) | |
| Prior Art Mil.Nylon/L&P 1112/1.9cm (3/4") | 650 | 13.72 (45.0) | |

In Table I, the air permeability is at a pressure of 1.27 cm (0.5 inches) water. Note that the second and third garment samples have MVT values and air permeabilities within the desired range, but can be constructed more easily, and less expensively, than the conventional foam with VERSATECH outer garment as described in the first garment sample.

9

TABLE II

| Foam Sample | Spray Resistance (Per cent Wet Pick-up) | |
|---|---|---|
| | 90 angle | 45 angle |
| Prior Art L&P 1112/0.95cm(3/8") | 257 | 548 |
| Prior Art L&P 1115/1.27cm(1/2") | 290 | 552 |
| Skin Foam 0.95cm(3/8") | 70.4 | 121 |

The values in Table II were obtained using the AATCC test method 42-1980 except that the sample weight increase was determined instead of blotter weight increase and used to calculate percentage wet pick-up because the sponge-like nature of the foams prevented water from passing through the blotter. The sample size for the 90 degree test was a 18 cm x 30 cm (7 inch by 12 inch) rectangle, while the sample size for the 45 degree test was a 12.4 cm (4 7/8 inch) diameter circle.

TABLE III

| Foam Sample | Surface Friction Resistance | |
|---|---|---|
| | 51 gm load kg (lbs) | 0.45 (1 lb) load kg (lbs) |
| Prior Art L&P 1112/0.95cm(3/8") | 0.09 (0.2) | 1.18 (2.6) (avg.) |
| Skin Foam | 0.09 (0.2) | 0.77 (1.7) (avg.) |

The values of Table III were produced using a Scott tester in which a loaded sled is pulled across the surface of the test sample. Note that the friction with a 0.45 kg (one pound) load of the skin foam in the garment is significantly less than that for the prior art foam. This significant reduction in surface friction is also confirmed by the subjective reaction of workers who manufacture garments from the foam, the skinned foam construction universally being praised for improvements in handling, cutting, feeding, and stitching compared to conventional open cell foams. In cutting, the skin foam sheets have been determined to be much easier to align on the table, and the cutting knife slices through them with less difficulty than experienced with conventional open cell polyurethane foam. Handling at the sewing machine is better than with standard foam, too. Alignment of plies for seaming is better, resistance or drag on the sewing table is reduced allowing easier and more even feeding, and the foam does not "spin" as much. In stitching, the skin foam reduces the thread splitting that occurs with standard foam, does not stretch as much during stitching, and there is less puckering and the pieces fit together better. Three-eighth inch skin foam is easier to sew than any other foam utilized in the manufacture of foam-containing cold weather garments to date, including 0,635 cm (1/4 inch) conventional foam.

It will thus be seen that a cold weather garment is provided which is much easier to construct than prior art desirable cold weather garments, yet has the same desirable properties as far as MVT value and cold weather insulation are concerned. Further, enhanced wind and water resistance, and/or the ability to select from a wider variety of outer shell fabrics while achieving enhanced wind and water resistance, are desirable attributes of the invention.

**Claims**

1. A cold weather garment (10,11) comprising: an interior synthetic lining fabric (16); a synthetic outer fabric (15); a layer of preponderantly open cell foam (17,117,217,317,417) at least 0.635 cm (1/4 inch) thick between the interior lining, foam layer, and outer fabric connected together by connecting means (30) to form a garment, the garment having an MVT value of at least 500 grams per square metre per 24 hours, characterised in that the garment has an air permeability of less than 4.573 cubic metres per minute per square metre (15 cubic feet per minute per square foot) at 0.0127 metres (0.5 inches) head of water.

2. A garment as recited in Claim 1 further characterised in that the outer fabric (15) comprises a fabric having an air permeability of less than 4.573 cubic metres per minute per square metre (15 cubic feet per minute per square foot) at 0.0127 metres (0.5 inches) head of water; and having a moisture vapour

EP 0 251 640 B1

transmission of at least 1,000 grams per square metre per 24 hours.

3. A garment as recited in Claim 2 further characterised in that the outer fabric (15) is a woven fabric, woven from a fine denier, multi-filament, polyester or polyamide yarn (19) so that it has a high density.

4. A garment as recited in Claim 1 further characterised in that the foam (17,117,217,317,417) comprises polyurethane foam.

5. A garment as recited in Claim 2 further characterised in that the outer fabric (15) is woven of polyamide yarn having a warp count of between about 63-79 and a filling count of between about 57-61.

6. A garment as recited in Claim 1 further characterised in that said foam (117,217) comprises a first face (21,220), and a second, convoluted, face (22,221), said convoluted face including peaks (23) and valleys (24), and said convoluted face disposed in abutting relationship with the interior lining fabric (16).

7. A garment as recited in Claim 6 further characterised in that the first face (21,220) is substantially flat and is in abutting relationship with the outer fabric (15), and the thickness (42) of said foam from said first face to said valleys (25) is approximately 1/2 the thickness (40) of said foam from said first face to said peaks (23).

8. A garment as recited in Claim 1 further characterised in that said foam layer (217,317,417) has first (220,320,420) and second (221,321, 421) major faces, said first face being flat, and disposed in abutting relationship with the outer fabric (15), and at least said first face has a skin (220, 320, 420) so as to enhance ease of construction and wind resistance.

9. A garment as recited in claim 8 further characterized in that said foam layer comprises a plurality of sub layers (417), each sub layer having a first face (420) thereof which is substantially flat and skinned, so as to enhance the wind resistance of the garment.

10. A garment as recited in claim 8 further characterized in that said foam layer (217, 317, 417) has a moisture transmission value rate of at least 500 gms/sq. meter/24 hrs., an air permeability of less than about 10 cfm/sq.ft. at a pressure of 0.5 inches of water, a spray resistance of less than 100% wet pick-up at a 90 deg. angle of impact and less than 150% at a 45 deg. angle, and a surface friction of a skin face (220, 320, 420) of less than about 2 pounds using a one pound test load.

## Revendications

1. Vêtement pour le froid (10,11) comprenant : une matière synthétique servant de doublure intérieure(16) ; une matière synthétique extérieure (15) ; une couche de mousse principalement cellulaire (17, 117, 217, 317, 417) d'une épaisseur minimale de 0,635 cm (1/4 de pouce) entre la doublure intérieure, la couche de mousse et la matière extérieure reliées entre elles par des moyens de liaison (30) pour former un vêtement, ce vêtement ayant une valeur TVH (Transmission de la vapeur d'humidité) d'au moins 500 grammes par mètre carré par 24 heures, caractérisé en ce que le vêtement a une perméabilité à l'air d'une valeur inférieure à 4,573 mètres cubes par minute par mètre carré (15 pieds cubes par minute par pied carré) à 0,0127 mètres (0,5 pouce) de pression d'eau.

2. Vêtement qui, tel que décrit dans la revendication 1, est aussi caractérisé en ce que la matière extérieure (15) comprend une matière ayant une perméabilité à l'air inférieure à 4,573 mètres cubes par minute par mètre carré (15 pieds cubes par minute par pied carré) à 0,0127 mètres (0,5 pouce) de pression d'eau et une transmission de vapeur d'humidité d'au moins 1.000 grammes par mètre carré par 24 heures.

3. Vêtement qui, tel que décrit dans la revendication 2, est aussi caractérisé en ce que la matière extérieure (15) est une matière tissée à partir de polyester ou de fil polyamide (19) fin denier, multifilament, qui permet d'obtenir une haute densité.

4. Vêtement qui, tel que décrit dans la revendication 1, est aussi caractérisé en ce que la mousse (17,

11

117, 217, 317, 417) comprend du polyuréthane cellulaire.

**5.** Vêtement qui, tel que décrit dans la revendication 2, est aussi caractérise en ce que la matière extérieure (15) est tissée à partir de fil polyamide ayant un compte en chaîne qui varie entre 63-79 environ et un compte en trame variant entre 57-61.

**6.** Vêtement qui, tel que décrit dans la revendication 1, est aussi caractérisé en ce que ladite mousse (117,217) comprend une première couche de tissu (21,220), et une deuxième couche de tissu convolutée (22,221), ladite couche convolutée comprenant des aspérités (23) et des profondeurs (24), et ladite couche convolutée étant reliée à la doublure intérieure (16).

**7.** Vêtement qui, tel que décrit dans la revendication 6, est aussi caractérisé en ce que la première copuche de tissu (21,220) est essentiellement plate et reliée à la matière extérieure (15), et l'épaisseur (42) de la dite mousse à partir de ladite première jusqu'aux profondeurs (25) est d'environ 1/2 de l'épaisseur (40) allant de ladite mousse de la première couche de tissu jusqu'aux aspérités en question (23).

**8.** Vêtement qui, tel que décrit dans la revendication 1, est aussi caractérisé en ce que ladite couche de mousse (217,317,417) est pourvue d'une première couche de tissu (220,320,420) et de deuxièmes couches principales (221,321,421), ladite première couche étant plate et étant reliée à la matière extérieure (15), ladite première couche étant en outre munie d'une pellicule (220,320,420) permettant d'améliorer le processus d'élaboration et la résistance au vent.

**9.** Vêtement qui, tel que décrit dans la revendication 8, est aussi caractérisé en ce que ladite couche de mousse comprend une série de couches secondaires (417), chaque couche secondaire étant pourvue de sa propre première couche (420) essentiellement plate et munie d'une pellicule, pour améliorer la résistance du vêtement au vent.

**10.** Vêtement qui, tel que décrit dans la revendication 8, est aussi caractérisé en ce que ladite couche de mousse (217,317,417) a un taux de valeur de transmission d'humidité d'au moins 500 gms/m2/24 heures, une perméabilité à l'air inférieure à environ 10 pieds cubes/minute/pied carré à une pression de 0,5 pouce d'eau, une résistance aux gouttes d'eau inférieure à 100 % de concentration d'humidité à un angle d'impact de 90° et inférieure à 150 %, à un angle d'impact de 45°, et une surface de friction de la pellicule de surface (220,320,420) inférieure à environ 2 livres en utilisant une charge d'essai d'une livre.

**Patentansprüche**

**1.** Ein Kleidungsstueck (10,11) fuer kaltes Wetter,
umfassend: einen Innenfutterstoff aus Synthetikmaterial (16);
einen Aussenstoff aus Synthetikmaterial (15); eine Schicht Schaum ueberwiegend offener Zellstruktur (17,117,217,317, 417) mindestens 0,635 cm (1/4 Zoll) stark zwischen dem Innenfutter, der Schaumschicht, und dem Aussenstoff verbunden durch Verbindungsmittel (30) zur Bildung eines kleidungsstueckes, wobei das Kleidungsstueck einen Wasserdampfdurchlaessigkeitswert von wenigstens 500 g/qm pro 24 Stunden aufweist, dadurch gekennzeichnet, dass das Kleidungsstueck eine Luftdurchlaessigkeit von weniger als 4,573 cbm/min pro Quadratmeter (15 Kubikfuss pro Minute pro Quadratfuss) bei 0,0127 m (0,5 Zoll) Wassersaeule hat.

**2.** Ein Kleidungsstueck nach Anspruch 1, dadurch gekennzeichnet, dass der Aussenstoff (15) einen Stoff mit einer Luftdurchlaessigkeit von weniger als 4,573 cbm/min pro Quadratmeter (15 Kubikfuss pro Minute pro Quadratfuss) bei einer Wassersaeule von 0,0127 m (0,5 Zoll) umfasst; und eine Wasserdampfdurchlaessigkeit von wenigstens 1.000 g/qm pro 24 Stunden aufweist.

**3.** Ein Kleidungsstueck nach Anspruch 2, ferner dadurch gekennzeichnet, dass es sich bei dem Aussenstoff (15) um ein Gewebe handelt, das aus Multifilament- Polyster- oder Polyamidgarn (19) feinen Deniers hergestellt ist, damit es eine hohe Dichte aufweist.

**4.** Ein Kleidungsstueck nach Anspruch 1 ferner dadurch gekennzeichnet, dass der Schaum (17,117,217,317,417) Polyurethanschaum beinhaltet.

5. Ein Kleidungsstueck nach Anspruch 2 ferner dadurch gekennzeichnet dass der Aussenstoff (15) aus Polyamidgarn einer Kettfadennummer zwischen ungefaehr 63-79 und einer Fuellgarnnummer zwischen ungefaehr 57-61 gewebt ist.

6. Ein Kleidungsstueck nach Anspruch 1 ferner dadurch gekennzeichnet, dass besagter Schaum (117,217) eine erste Flaeche (21,220) umfasst, und eine zweite, spiralige, Flaeche (22, 221), besagte spiralige Flaeche Gipfel (23) und Taeler (24) einschliesst, und besagte spiralige Flaeche in angrenzender Beziehung zu dem inneren Futterstoff (16) angeordnet ist.

7. Ein Kleidungsstueck nach Anspruch 5 ferner dadurch gekennzeichnet, dass die erste Flaeche (21, 220) im wesentlichen flach ist und in angrenzender Beziehung zum Aussenstoff (15) steht, und die Staerke (42) des besagten Schaumes von der besagten ersten Flaeche zu den besagten Taelern (25) ungefaehr die halbe Staerke (40) des besagten Schaumes von der besagten ersten Flaeche zu den besagten Gipfeln (23) betraegt.

8. Ein Kleidungsstueck nach Anspruch 1 ferner dadurch gekennzeichnet, dass besagte Schaumschicht (217,317,417) erste (220,320,420) und zweite (221,321,421) Hauptflaechen hat, besagte erste Flaeche flach ist, und in angrenzender Beziehung zum Aussenstoff (15) angeordnet ist, und wenigstens besagte erste Flaeche eine Haut (220,320,420) hat, um Leichtigkeit der Herstellung und Windwiderstand zu erhoehen.

9. Ein Kleidungsstueck nach Anspruch 8 ferner dadurch gekennzeichnet, dass die besagte Schaumschicht eine Vielzahl von Unterschichten (417) aufweist, wobei jede Unterschicht eine erste Flaeche (420) hat, die im wesentlichen flach und haeutig ist, um den Windwiderstand des Kleidungsstueckes zu Vergroessern.

10. Ein Kleidungsstueck nach Anspruch 8 ferner dadurch gekennzeichnet, dass die besagte Schaumschicht (217,317, 417) einen Wasserdampfdurchlaessigkeitswert von wenigstens 500 g/qm/24 Stunden, eine Luftdurchlaessigkeit von weniger als Kubikfuss pro Minute pro Quadratfuss bei einem Druck von 0,5 Zoll Wasser, einen Spritzwiderstand von weniger als 100% Feuchtigkeitsaufnahme bei einem Aufprallwinkel von 90 Grad und weniger als 150% bei einem winkel von 45 Grad, und eine Oberflaechenreibung einer Hautflaeche (220,320,420) von weniger als ca. 2 Pfund (lbs.) unter Verwendung eines Testgewichtes von einem Pfund (lbs.) aufweist.

FIG. 1

FIG. 2

FIG. 6

FIG. 3

19

FIG. 4

117

40

25          23    24

FIG. 5

23    24    25    22

25

40    42
      42

117    21

FIG. 7

FIG. 8

FIG. 9

FIG. 10

FIG. 11